# EUROPÄISCHE PATENTANMELDUNG

(11) **EP 1 894 825 A1**
(43) Veröffentlichungstag der Anmeldung: **05.03.2008**
(21) Anmeldenummer: 07450148.7
(22) Anmeldetag: 27.08.2007
(51) Int. Cl.: B62J 13/00

(54) **Kettenschutz**

(30) Priorität: 28.08.2006 AT 14312006
(71) Anmelder: Erlbeck, Günther, Dr., 8570 Voitsberg (AT)
(72) Erfinder: Erlbeck, Günther, Dr., 8570 Voitsberg (AT)
(74) Vertreter: Hehenberger, Reinhard

(57) **Zusammenfassung**

Um den Kofferraum eines Fahrzeuges beim Transport von Fahrrädern vor Verschmutzung durch die Kette zu schützen und die Kette und andere empfindliche mechanische Teile, wie den Kettenwerfer, vor Beschädigungen zu schützen, weist ein Kettenschutz für Fahrräder, der zum Transport des Fahrrades um die Kette gelegt werden kann, zwei Schalen (1,2) auf, welche auseinandernehmbar und zusammenfügbar oder - klappbar und über wenigstens ein Verbindungselement miteinander verbindbar sind.

## Beschreibung

Die Erfindung betrifft einen Kettenschutz für Fahrräder, der zum Transport des Fahrrades um die Kette gelegt werden kann.

Fahrräder werden oft zum Transport in den Kofferraum eines Autos gepackt, wobei es in den meisten Fällen erforderlich ist, ein oder beide Laufräder abzumontieren, da der Kofferraum nicht groß genug ist. In diesen Fällen, aber auch in den Fällen, in denen der Kofferraum groß genug ist, das Fahrrad ohne Zerlegung hinein zu stellen, besteht die Gefahr, dass der Kofferraum durch die Fahrradkette verschmutzt wird. Um dies zu verhindern wird die Kette meist notdürftig mit Tüchern oder dergleichen umwickelt, was zum einen den Kofferraum oft nur unzureichend vor unmittelbarer Verschmutzung durch die Kette schützt, und zum anderen, da diese Tücher bei wiederholter Verwendung meist selbst bereits verschmutzt sind, zu einer Verschmutzung des Kofferraums und der Hände des Benutzers durch die Tücher führt.

Der Erfindung liegt daher die Aufgabe zu Grunde, einen Kettenschutz zu schaffen, der die erwähnten Nachteile nicht aufweist.

Gelöst wird diese Aufgabe durch einen Kettenschutz, der durch zwei Schalen gekennzeichnet ist, welche auseinandernehmbar und zusammenfügbar oder -klappbar und über wenigstens ein Verbindungselement miteinander verbindbar sind.

Bevorzugte Ausführungsformen der Erfindung sind Gegenstand der Unteransprüche.

Bei der Erfindung sind zwei Schalen vorgesehen, die entweder gelenkig miteinander verbunden und aufklappbar oder vollständig auseinandernehmbar und wieder zusammenfügbar sind. Bevor das Fahrrad in den Kofferraum gepackt wird, werden die beiden Schalen über die Kette gelegt und miteinander verbunden. Dadurch ist auf einfache Weise nicht nur der Kofferraum vor Verschmutzung geschützt sondern auch gleichzeitig die Kette und andere empfindliche mechanische Teile, wie der Kettenwerfer, vor Beschädigungen.

Nachfolgend wird eine bevorzugte Ausführungsform der Erfindung mit Bezugnahme auf die angeschlossenen Zeichnungen näher erläutert.

Es zeigt:
- Fig. 1: den erfindungsgemäßen Kettenschutz in Schrägansicht,
- Fig. 2: den Kettenschutz in Schrägansicht aus einer anderen Richtung,
- Fig. 3: ein Detail des Kettenschutzes in vergrößertem Maßstab,
- Fig. 4: ein erfindungsgemäßes Verbindungselement und
- Fig. 5: ein weiteres Detail des erfindungsgemäßen Kettenschutzes in vergrößertem Maßstab.

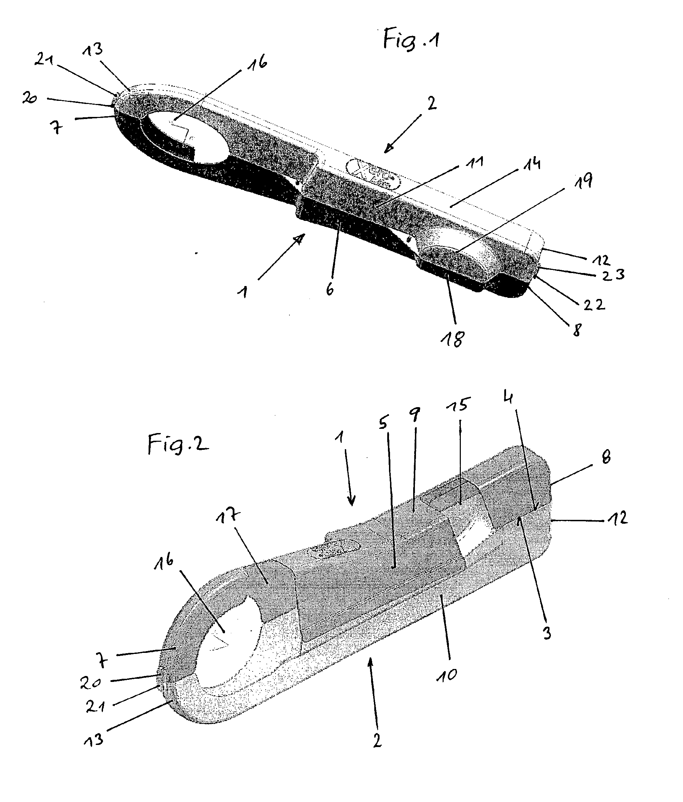

In Fig. 1 und 2 ist zu sehen, dass der erfindungsgemäße Kettenschutz aus zwei Schalen 1 und 2 besteht, die an Kontaktflächen 3 und 4 aneinander anliegen. Die beiden Schalen 1, 2 weisen im rechten Winkel zu den Kontaktflächen 3, 4 gemessen im Wesentlichen die gleiche Höhe auf, was zwar vorteilhaft ist aber selbstverständlich nicht unbedingt so sein muss.

Jede Schale 1, 2 weist einen im Wesentlichen U-förmigen Querschnitt mit Seitenwänden 5, 6, 10, 11, Stirnwänden 7, 8, 12, 13 sowie einer oberen Wand 9 und einer unteren Wand 14 auf. In den Wänden sind Durchbrechungen 15, 16 und 17 für Teile des Fahrrades angebracht. Die Durchbrechung 15 ist für die Strebe von der Hinterachse in Richtung zur Sattelstütze vorgesehen, wogegen die Durchbrechung 16 für die Pedalachse sowie die Tretkurbel und die Durchbrechung 17 für den vorderen Kettenwerfer vorgesehen sind. Die Durchbrechung 15 für die Strebe ist relativ lange ausgeführt, damit der erfindungsgemäße Kettenschutz für verschiedene Rahmenlängen verwendet werden kann.

An den Seitenwänden 6 und 11 ist jeweils ein Teil 18, 19 einer Ausbuchtung vorgesehen, die zur Aufnahme des Kettenwerfers dient.

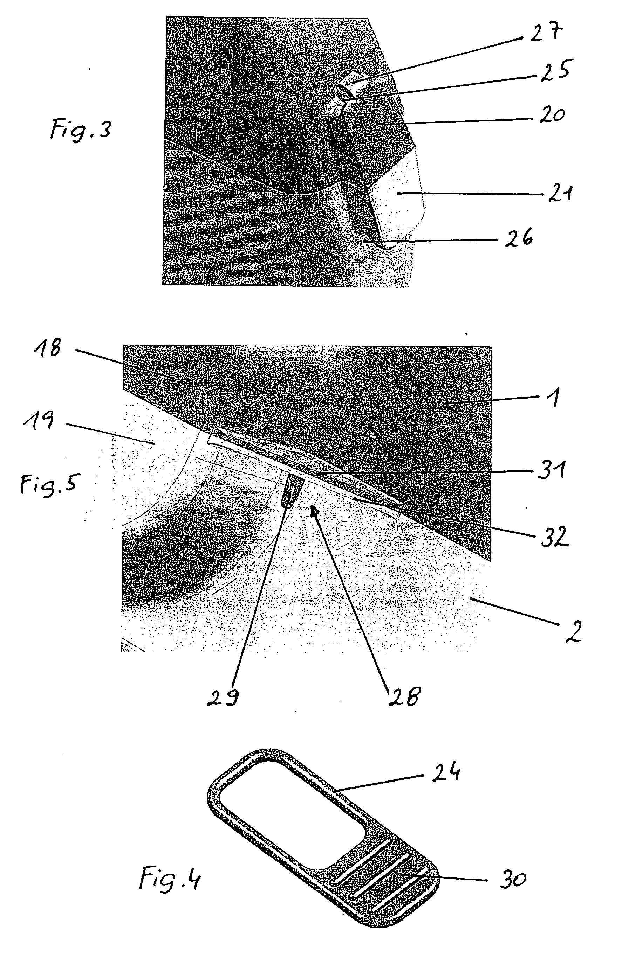

Die Verbindung der beiden Schalen 1, 2 kann wie im dargestellten Ausführungsbeispiel in Fig. 3 in vergrößertem Maßstab zu sehen ist, zwei Paar Vorsprünge 20, 21 und 22, 23 aufweisen, um die ein in Fig. 4 dargestelltes Gummiband 24 mit einer Grifflasche 30 gelegt werden kann. Die Vorsprünge 20 bis 23 haben Vertiefungen 25, 26, in welche das Gummiband 24 unter Spannung eingelegt wird, wodurch die beiden Schalen 1, 2 gegeneinander gedrückt werden. Um das Gummiband 24 verliersicher aber austauschbar an einer der beiden Schalen zu befestigen, ist an einem Vorsprung 20 eine Rastnase 27 angeordnet, hinter der das Gummiband 24 festgelegt wird.

Um ein exaktes und einfaches Zusammenfügen der beiden Schalen 1, 2 zu ermöglichen, sind im Ausführungsbeispiel zwei Positionierungseinrichtungen 28 in Form eines konischen Stiftes 29 an einer Schale 1 und einer in den Zeichnungen nicht sichtbaren Ausnehmung in der anderen Schale 2 vorgesehen. Die Stifte 29 und Ausnehmungen sind bevorzugt an Stegen oder Rippen 31, 32 im Eckbereich von Abwinkelungen der Schalenwände 6, 11, wie im Bereich der Ausbuchtungen 18, 19, angebracht, da in diesen Bereichen eine relativ steife Struktur der Schalen 1, 2 vorliegt und die Stege dort nicht zusätzlich über die Wände der Schalen 1, 2 vorstehen.

Alternativ kann anstelle eines Paars von Vorsprüngen 20, 21 oder 22, 23 ein Scharnier vorgesehen sein, sodass die beiden Schalen 1, 2 auseinander und zusammen geklappt werden können und nur an einem Ende mit einem Verbindungselement, wie z.B. dem Gummiband 24 mit den Vorsprüngen 20, 21 bzw. 22, 23, verbunden werden müssen.

Es ist auch möglich, dass anstelle des Scharniers eine Schale eine Ausnehmung aufweist, in welche ein Ansatz an der anderen Schale hineingesteckt oder eingehakt werden kann, worauf die beiden Schalen 1, 2 zusammen geklappt und nur am anderen Ende mit einem Verbindungselement, wie z.B. dem Gummiband 24 mit den Vorsprüngen 20, 21 bzw. 22, 23, verbunden werden können.

Natürlich können anstelle des beschriebenen Verbindungselementes in Form eines Gummiringes 24 auch andere Verbindungselemente wie Klettverschlüsse, Schnappverschlüsse oder dergleichen verwendet werden.

## Patentansprüche

1. Kettenschutz für Fahrräder, der zum Transport des Fahrrades um die Kette gelegt werden kann, **gekennzeichnet durch** zwei Schalen (1, 2), welche auseinandernehmbar und zusammenfügbar oder -klappbar und über wenigstens ein Verbindungselement (24) miteinander verbindbar sind.

2. Kettenschutz nach Anspruch 1, **dadurch gekennzeichnet, dass** die Schalen (1, 2) vollständig auseinandernehmbar und mittels wenigstens zweier Verbindungselemente (24) an gegenüber liegenden Seiten miteinander verbindbar sind.

3. Kettenschutz nach Anspruch 1 oder 2, **dadurch gekennzeichnet, dass** eine Schale (1, 2) zur Verbindung mit der anderen Schale (1, 2) eine Ausnehmung aufweist, in welche ein Ansatz an der anderen Schale (1, 2) hineingesteckt oder eingehakt werden kann.

4. Kettenschutz nach Anspruch 1, **dadurch gekennzeichnet, dass** die zwei Schalen (1, 2) über ein Gelenk miteinander verbunden und mittels wenigstens eines dem Gelenk gegenüber liegenden Verbindungselementes (24) miteinander verbindbar sind.

5. Kettenschutz nach einem der Ansprüche 1 bis 4, **dadurch gekennzeichnet, dass** das Verbindungselement (24) ein elastischer Ring oder dergleichen ist, der an Vorsprüngen (20, 21; 22, 23) der Schalen (1, 2) einhakbar ist.

6. Kettenschutz nach Anspruch 5, **dadurch gekennzeichnet, dass** das Verbindungselement (24) mit einer Schale (1) verbunden ist.

7. Kettenschutz nach Anspruch 5 oder 6, **dadurch gekennzeichnet, dass** am Verbindungselement (24) eine Grifflasche (30) oder dergleichen angeordnet ist.

8. Kettenschutz nach einem der Ansprüche 1 bis 4, **dadurch gekennzeichnet, dass** das Verbindungselement ein Schnapp- oder Rastverschluss ist.

9. Kettenschutz nach einem der Ansprüche 1 bis 8, **dadurch gekennzeichnet, dass** die Schalen Ausnehmungen (16, 16, 17) für Fahrradteile, wie Rahmenstreben, Pedalhebel und Kettenwerfer, aufweisen.

10. Kettenschutz nach einem der Ansprüche 1 bis 9, **dadurch gekennzeichnet, dass** die Schalen (1, 2) eine Ausbuchtung (18, 19) für den Kettenwerfer aufweisen.

11. Kettenschutz nach einem der Ansprüche 1 bis 10, **dadurch gekennzeichnet, dass** die Schalen (1, 2) Kontaktflächen (3, 4) aufweisen, an denen sie aneinander anliegen und dass im Bereich dieser Kontaktflächen (3, 4) wenigstens eine formschlüssige Positionierungseinrichtung (28) angeordnet ist.

12. Kettenschutz nach Anspruch 11, **dadurch gekennzeichnet, dass** die Positionierungseinrichtung (28) ein vorzugsweise konisches Führungselement (29) an einer Schale (1) und eine Ausnehmung in der anderen Schale (2) aufweist.
